# EUROPEAN PATENT APPLICATION

(11) **EP 4 835 167 A1**
(43) Date of publication of application: **04.11.2026**
(21) Application number: 25210798.2
(22) Date of filing: 23.10.2025
(51) Int. Cl.: C25D 1/04, H01M 4/66, C25D 3/38

(54) **COPPER FOIL, AND ELECTRODE AND SECONDARY BATTERY INCLUDING THE SAME**

(30) Priority: 30.04.2025 KR 20250057673
(71) Applicant: SK Nexilis Co., Ltd., Jeollabuk-do 56137 (KR)
(72) Inventor: JIN, Shan Hua, 03142 Seoul (KR); KIM, Taeyeong, 03142 Seoul (KR)
(74) Representative: Prüfer & Partner mbB Patentanwälte · Rechtsanwälte

(57) **Abstract**

Provided are a copper foil and an electrode and secondary battery including the same, the copper foil including: a copper layer, wherein the copper foil has an indentation elastic modulus of 15 MPa to 30 MPa according to measurement conditions below based on ISO 14577:

[Measurement conditions]

- Measurement equipment: HM 2000 (Helmut Fischer)
- Load: 15 mN
- Load increase time and unload time: 10 sec
- Creep holding time: 3 sec
- Indenter type: Vickers

## Description

### BACKGROUND OF THE DISCLOSURE

### Field of the Disclosure

The present disclosure relates to a copper foil and an electrode and secondary battery including the same.

### Description of the Related Art

A secondary battery, as an energy storage device, is widely used in various applications such as portable devices, electric vehicles, and energy storage systems (ESS). In particular, as high energy density and high power characteristics are simultaneously required, advanced technological development for the structures and constituent materials of electrodes is continuously ongoing.

Generally, a negative electrode is formed by applying a slurry composed of an active material, a binder, and a conductive agent onto a current collector, and then subjecting it to drying and roll-press processes. As the current collector, a copper foil, which has excellent electrical conductivity and is easy to process, is widely used.

Recently, as the demand for higher density and reduced thickness of electrodes has increased, design conditions such as an increase in the coating amount of an active material, an improvement in electrode density, and a reduction in electrode thickness are becoming progressively more advanced. Accordingly, various performance requirements such as mechanical durability, process adaptability, surface precision, and coating uniformity are being simultaneously imposed on copper foil.

In particular, during electrode manufacturing, the copper foil is repeatedly subjected to high-pressure roll press and the active material is repeatedly subjected to a compressive load, which may cause various process-related problems such as reduced mechanical stability, wrinkling, tearing, softening, and the generation of surface defects.

Therefore, as electrode manufacturing conditions become more advanced, research aimed at optimizing multifaceted characteristics of the copper foil, such as its thickness, crystal structure, surface roughness, chemical stability, and residual stress, is being actively conducted.

### SUMMARY OF THE DISCLOSURE

Therefore, the present disclosure has been made in view of the above problems, and it is one object of the present disclosure to provide a copper foil capable of securing local elastic restoring force and surface rigidity and having improved mechanical properties and battery characteristics, and an electrode and secondary battery including the copper foil.

In accordance with an aspect of the present disclosure, the above and other objects can be accomplished by the provision of a copper foil, including: a copper layer, wherein the copper foil has an indentation elastic modulus of 15 MPa to 30 MPa according to measurement conditions below based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

In an embodiment of the present disclosure, the copper foil may have a Mechanical Stability Index (MSI) of 1,800 or more according to Equation 1 below: [Equation 1] 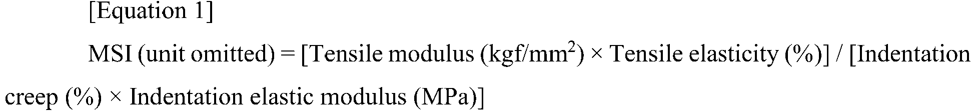 MSI (unit omitted) = [Tensile modulus (kgf/mm2) × Tensile elasticity (%)]/[Indentation creep (%) × Indentation elastic modulus (MPa)] where the indentation creep is measured according to the measurement conditions of the indentation elastic modulus, and the tensile modulus and the tensile elasticity are measured according to IPC-TM-650.

In an embodiment of the present disclosure, the indentation creep may be 2 % to 5 %.

In an embodiment of the present disclosure, the tensile modulus may be 5,000 kgf/mm² to 7,000 kgf/mm².

In an embodiment of the present disclosure, the tensile elasticity may be 20 % to 50 %.

In an embodiment of the present disclosure, the copper foil may include a protective layer formed on at least one surface of the copper layer, wherein the protective layer includes at least one of a chromium compound, a silane compound, and a nitrogen compound.

In accordance with another aspect of the present disclosure, there is provided an electrode, including: a current collector including a copper foil; and an active material layer formed on at least one surface of the current collector, wherein the copper foil includes a copper layer, and has an indentation elastic modulus of 15 MPa to 30 MPa according to measurement conditions below based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

In accordance with still another aspect of the present disclosure, there is provided a secondary battery, including: a positive electrode; a positive electrode; an electrolyte; and a separator interposed between the negative electrode and positive electrode, the negative electrode includes a current collector including a copper foil, wherein the copper foil includes a copper layer, and has an indentation elastic modulus of 15 MPa to 30 MPa according to measurement conditions below based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

In accordance with yet another aspect of the present disclosure, there is provided a composition for preparing a copper foil, including: copper ions; an inorganic acid; and a protein derivative having a weight average molecular weight of 1,000 g/mol to 10,000 g/mol.

In an embodiment of the present disclosure, the content of the protein derivative may be 3 ppm to 20 ppm based on a total weight of the composition for preparing a copper foil.

In an embodiment of the present disclosure, the protein derivative may include an α-helix structure and a β-sheet structure, wherein a ratio of the α-helix structure to the β-sheet structure may be 7:3 to 3:7.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 schematically illustrates the sectional view of a copper foil according to an embodiment;
FIG. 2 schematically illustrates the sectional view of a negative electrode according to an embodiment;
FIG. 3 schematically illustrates the sectional view of a secondary battery according to an embodiment; and
FIG. 4 schematically illustrates an apparatus for manufacturing a copper foil according to an embodiment.

### DETAILED DESCRIPTION OF THE DISCLOSURE

Structural or functional descriptions of embodiments disclosed in the present specification or application are merely illustrated for the purpose of explaining embodiments according to the technical idea of the present disclosure, embodiments according to the technical idea of the present disclosure may be implemented in various forms other than the embodiments disclosed in the present specification or application, and it is not to be construed that the technical idea of the present disclosure is limited to the embodiments described in the present specification or application.

In the specification, when a certain part "includes" a certain component, this indicates that the part may further include another component instead of excluding another component unless there is no different disclosure. In addition, it should be understood that all numerical ranges representing physical property values, dimensions, etc. of components described in the present specification or application are modified by the term 'about' in all cases unless otherwise specified. Further, in the present specification or application, 'ppm' means on a weight basis. Additionally, in the present specification or application, 'derived' means to indicate a component or structure originating from a certain substance, or the substance itself.

In addition, in the present specification or application, terms such as "below," "beneath," "lower," "above," and "upper" may be used to easily describe the correlation between one element or component and another, as illustrated in the drawings. The spatially relative terms should be understood as terms that include different orientations of a device during use or operation, in addition to the orientation shown in the drawings. For example, when a device shown in the drawings is turned over, a device described as "below" or "beneath" another device may be placed "above" the other device. Accordingly, the exemplary term "below" or "beneath" may encompass both orientations of below and above. Likewise, the exemplary term "above" or "upper" may encompass both orientations of above and below.

Hereinafter, a copper foil according to the present disclosure and an electrode and secondary battery including the copper foil are described.

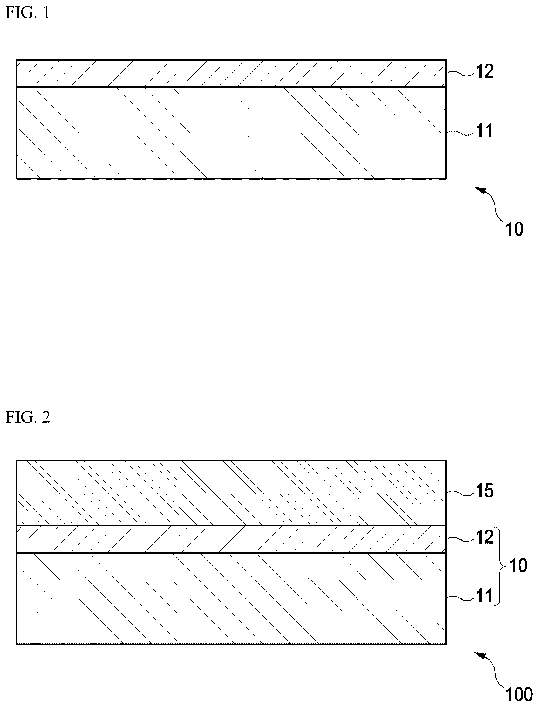

FIG. 1 schematically illustrates the sectional view of a copper foil according to an embodiment.

A copper foil 10 according to the present disclosure may include a copper layer 11. The copper layer 11 may include 99 % by weight or more, 99.3 % by weight or more, 99.6 % by weight or more, or 99.9 % by weight or more of copper (Cu).

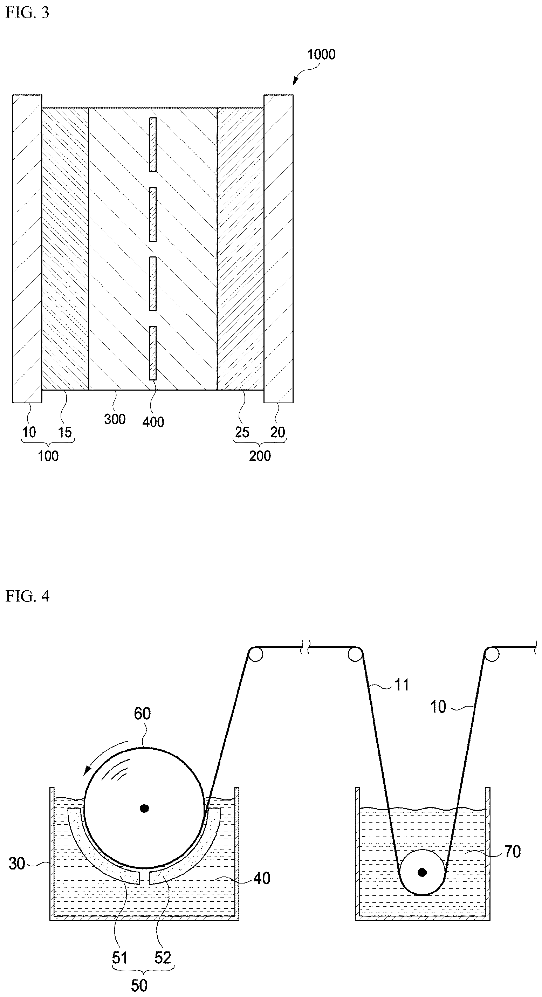

The copper layer 11 may be formed on a rotating cathode drum through electroplating. The copper layer 11 may include a shiny side that is in direct contact with the rotating cathode drum in the electroplating process and a matte side that is opposite thereto. Specifically, the copper layer 11 may be formed by a copper foil-manufacturing apparatus of FIG. 4 to be described below.

The copper layer 11 may include a metal chelating agent. A functional group included in the metal chelating agent may form a strong chelate bond with copper ions. The functional group may be an amino group and/or a hydroxy group. The amino group and/or the hydroxy group may be chelated with the copper ions to form a copper chelate complex. Since microcrystallines may be uniformly formed by the copper chelate complex, stress may be dispersed during thermal expansion of the copper layer 11. Since the copper ions may be prevented from agglomerating with impurities by the metal chelating agent, the recrystallization of the copper ions may be suppressed, so that thermal stability may be improved. The elastic modulus of the manufactured copper foil 10 may be controlled by the copper chelate complex. Since residual stress and interfacial stress on the copper foil 10 may be relieved by the copper chelate complex, Martens hardness to be described below may be improved.

The metal chelating agent may be derived from a component included in an electrolyte solution during a manufacturing process of the copper layer 11 to be described below. The metal chelating agent may be identified by Time-of-Flight Secondary Ion Mass Spectrometry (ToF-SIMS), X-ray Photoelectron Spectroscopy (XPS), and/or Fourier transform infrared spectroscopy (FT-IR).

The metal chelating agent may be at least one selected from the group consisting of chitosan, carboxymethyl chitosan, acetylated chitosan, polyethyleneimine, dendrimer, triethylenetetramine, glycine, citric acid, alginic acid, and pectin.

Preferably, the metal chelating agent may be chitosan including an amine group and a hydroxy group as functional groups.

The copper foil 10 may include a protective layer 12 formed on at least one surface of the copper layer 11. The protective layer 12 formed on one surface of the copper layer 11 is illustrated in FIG. 1, but the protective layer 12 may be formed on both surfaces of the copper layer 11.

The protective layer 12 may include at least one of a chromium compound, a silane compound, and a nitrogen compound. The protective layer 12 may prevent the oxidation and corrosion of the copper layer 11 and improve heat resistance thereof, thereby extending the lifespan of the copper foil 10 and the lifespan of a product including the copper foil 10.

The copper foil 10 may have an indentation elastic modulus of 15 MPa to 30 MPa according to the following measurement conditions based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

The indentation elastic modulus is elastic stiffness of material under indentation.

The indentation elastic modulus may be measured using a HM 2000 instrument (Helmut Fischer) equipped with a Vickers diamond indenter according to ISO 14577-1 as follows: The test load is set to 15 mN, with the load applied progressively over 10 seconds, held at maximum load for 3 seconds (creep holding time), and then gradually unloaded over 10 seconds. Indentation depth is continuously recorded during the loading and unloading processes. The maximum indentation depth is limited to no more than 10% of the thickness of the copper foil to minimize substrate effects. The specimen surface is prepared by appropriate polishing and cleaning to ensure accurate measurements. Environmental conditions, such as temperature and humidity, are maintained at 23±2°C and 50±5% RH during testing. Calibration of the measurement instrument and indenter is performed periodically in accordance with ISO 14577-2 to ensure reliable and reproducible results. Multiple indentations are conducted on designated locations of the specimen, and the resulting data are processed by calculating an average value.

The range of the indentation elastic modulus according to the measurement conditions may be an indicator representing elastic restoring force and mechanical rigidity in a local region of the surface of the copper foil 10. The range of the indentation elastic modulus according to the measurement conditions may be an indicator representing the interfacial adhesive force and peel resistance between the copper foil 10 and the active material layer. The range of the indentation elastic modulus according to the measurement conditions may be an indicator representing the structural stability and lifespan characteristics of a secondary battery including the copper foil 10 in a repeated charge/discharge environment. The range of the indentation elastic modulus according to the measurement conditions may be an indicator representing the resistance to local stress concentration and the mechanical reliability in high-temperature manufacturing processes, such as lamination, roll pressing, and stacking, using the copper foil 10

The indentation elastic modulus may be controlled depending upon the composition of an electrolyte solution, the content of each composition, and manufacturing process conditions in a manufacturing process of a copper foil to be described below.

The indentation elastic modulus may be 15 MPa to 30 MPa, 16 MPa to 30 MPa, 18 MPa to 30 MPa, or 18 MPa to 28 MPa. When the range is satisfied, mechanical damage, such as bending, wrinkling, tearing, and fracture, to an electrode may be prevented, and when applied as a current collector of a secondary battery, the current efficiency may be improved.

The copper foil 10 may have an indentation creep of 2 % to 5 %, 2.1 % to 5 %, 2.18 % to 5 %, or 2.18 % to 4 % under the same measurement conditions as the indentation elastic modulus. When the range is satisfied, the mechanical reliability of the copper foil 10 may be improved, the interfacial bonding stability with the active material layer may be secured, and excessive embrittlement or softening may be prevented.

The copper foil 10 may have a tensile modulus of 5,000 kgf/mm² to 7,000 kgf/mm², 5,500 kgf/mm² to 7,000 kgf/mm², 5,500 kgf/mm² to 6,700 kgf/mm², or 5,500 kgf/mm² to 6,700 kgf/mm², measured under the conditions of a length of 50 mm, a width of 12.7 mm, and a speed of 50 mm/min using Instron 6800 equipment according to IPC-TM-650.

The copper foil 10 may have a tensile elasticity of 20 % to 50 %, 20.5 % to 50 %, 20.5 % to 48 %, or 20.5 % to 46.2 % under the same measurement conditions as the tensile modulus.

When the range is satisfied, the bending phenomenon of the copper foil 10 may be prevented, the fracture resistance may be improved, and wrinkling and tearing phenomena may be prevented.

The copper foil 10 may have a Mechanical Stability Index (MSI) of 1,800 or more according to Equation 1 below: [Equation 1] 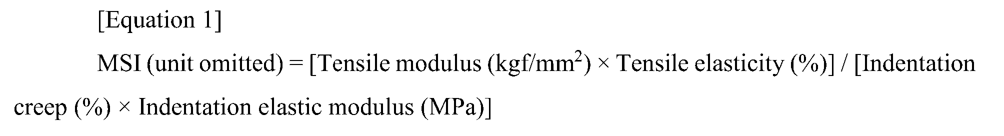 MSI (unit omitted) = [Tensile modulus (kgf/mm2) × Tensile elasticity (%)]/[Indentation creep (%) × Indentation elastic modulus (MPa)]

In Equation 1, the indentation creep is measured under the measurement conditions of the indentation elastic modulus, and the tensile modulus and the tensile elasticity may be measured under conditions of a length of 50 mm, a width of 12.7 mm, a test speed of 50 mm/min, 23 °C ± 3 °C, and 30% to 60 % relative humidity using a universal testing machine from Instron Corp., according to IPC-TM-650 section 2.4.18B standard.

MSI is an index that comprehensively represents the bulk rigidity and tensile elongation of the copper foil 10, as well as the elastic restoring force and creep resistance of the local surface, and may be an indicator representing mechanical stability and durability.

MSI effectively integrates the material's ability to elastically respond to external loads while accounting for time-dependent creep deformation, thus reflecting the foil's overall mechanical stability and recovery potential under operational stresses. Accordingly, MSI can be utilized as a critical performance parameter for evaluating the durability and mechanical integrity of copper foils used in applications requiring repetitive mechanical loading and environmental exposure.

As the MSI value increases, the copper foil 10 may maintain its initial rigidity and ductility against external stress, deformation over time on the local surface may be small, and the restoring force after deformation may be excellent.

MSI may be 1,800 or more, 1,840 or more, 1,846 or more, or 1,800 to 5,500. When the range is satisfied, the copper foil 10 may have excellent rigidity and elastic recovery, and since the viscoelastic deformation on the surface is small, the mechanical stability may be improved.

FIG. 2 schematically illustrates the sectional view of a negative electrode according to an embodiment.

An electrode according to the present disclosure may include a current collector including the copper foil 10; and an active material layer formed on at least one surface of the current collector.

The electrode may be a negative electrode 100. The active material layer may be a negative electrode active material layer 15.

The copper foil 10 may include a copper layer 11, and may have an indentation elastic modulus of 15 MPa to 30 MPa according to the following measurement conditions based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

The copper foil 10 may include a protective layer 12 formed on at least one surface of the copper layer 11. The copper foil, the copper layer, the protective layer, and the indentation elastic modulus may be the same as the copper foil, copper layer, protective layer, and indentation elastic modulus described above.

In FIG. 2, the protective layer 12 and negative electrode active material layer 15 formed on one surface of the copper layer 11 are illustrated, but the protective layer 12 and the negative electrode active material layer 15 may be formed on both surfaces of the copper layer 11.

A ratio of the thickness of the current collector to the total thickness of the electrode may be 1 % to 12 %, 3 % to 12 %, 5 % to 12 %, or 6 % to 12 %. When the range is satisfied, the mechanical support of the negative electrode active material layer 15 may be maintained, and energy density may be improved.

The negative electrode active material layer 15 may include a negative electrode active material.

The type of the negative electrode active material is not particularly limited, and a compound capable of reversible intercalation and deintercalation of lithium may typically be used. For example, carbonaceous materials such as artificial graphite, natural graphite, graphitized carbon fiber, amorphous carbon, and highly crystalline carbon; or metallic compounds capable of alloying with lithium such as Si, Al, Sn, Pb, Zn, Bi, In, Mg, Ga, Cd, a Si alloy, a Sn alloy, or an Al alloy may be used. Examples of low-crystalline carbon may include soft carbon and hard carbon, and examples of high-crystalline carbon may include high-temperature fired carbons such as natural graphite, kish graphite, pyrolytic carbon, mesophase pitch based carbon fiber, meso-carbon microbeads, mesophase pitches, and petroleum or coal tar pitch derived cokes. As the negative electrode active material, a composite including a metallic compound and a carbonaceous material may be used as needed.

The negative electrode active material may be mixed with a binder and a conductive agent to be formed as the negative electrode active material layer 15.

The binder may improve the binding force between the negative electrode active material and a conductive agent, and may improve the binding force between the negative electrode active material layer 15 and the copper foil 10.

The type of binder is not particularly limited, but for example, polyvinylidene fluoride (PVDF), polytetrafluoroethylene (PTFE), fluorine rubber, styrene-butadiene rubber (SBR), cellulose-based resin, and the like may be used.

The conductive agent may improve the conductivity of the negative electrode active material. The type of conductive agent is not particularly limited, but for example, Super-P, graphite, acetylene black, and the like may be used.

The electrode may include a primer layer disposed between the copper foil 10 and the negative electrode active material layer 15.

The primer layer may improve the interfacial adhesion between the copper foil 10 and the negative electrode active material layer 15.

The primer layer may include a thickener. The thickener may include at least one selected from the group consisting of carboxymethyl cellulose (CMC), methyl cellulose (MC), hydroxypropyl cellulose (HPC), methyl hydroxypropyl cellulose (MHPC), ethyl hydroxyethyl cellulose (EHEC), methyl ethyl hydroxyethyl cellulose (MEHEC), and cellulose gum.

The primer layer may include a binder. The binder may include at least one selected from the group consisting of styrene-butadiene rubber, polyvinylidene fluoride, polyvinyl alcohol, starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butylene rubber, fluorine rubber, styrene (styrene monomer: SM), butadiene (BD), and butyl acrylate (BA).

The primer layer may include at least one conductive agent selected from the group consisting of natural graphite, artificial graphite, carbon black, acetylene black, Ketjen black, channel black, furnace black, lamp black, thermal black, carbon fiber, metal fiber, fluorocarbon, aluminum powder, nickel powder, zinc oxide, potassium titanate, titanium oxide, and polyphenylene derivatives to improve conductivity.

FIG. 3 schematically illustrates the sectional view of a secondary battery according to an embodiment.

The secondary battery 1000 according to the present disclosure may include a negative electrode 100, a positive electrode 200, an electrolyte 300, and a separator 400 interposed between the negative electrode 100 and the positive electrode 200, the negative electrode 100 may include a current collector including the copper foil 10, and the copper foil 10 may include a copper layer, and have an indentation elastic modulus of 15 MPa to 30 MPa according to the following measurement conditions based on ISO 14577:

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers

The negative electrode 100 and the indentation elastic modulus may be the same as the negative electrode and indentation elastic modulus described above.

The positive electrode 200 may include a structure in which a positive electrode active material layer 25 is formed on a positive electrode current collector 20.

The positive electrode 200 may be manufactured by a general method known in the art. For example, the positive electrode 200 may be manufactured by preparing a slurry by mixing and stirring a positive electrode active material, a solvent, a binder, a conductive agent, and a dispersant, and then applying the slurry onto the positive electrode current collector 20, compressing, and drying.

The positive electrode current collector 20 is a metal with high conductivity and is not particularly limited as long as it is a metal to which the slurry of the positive electrode active material can easily adhere and which has high conductivity without causing a chemical change in the secondary battery. For example, stainless steel, aluminum, nickel, titanium, sintered carbon, or a surface-treated material thereof with carbon, nickel, titanium, silver, or the like on the surface of aluminum or stainless steel may be used. In addition, fine irregularities may be formed on the surface of the positive electrode current collector to increase the adhesion of the positive electrode active material. The positive electrode current collector 20 may be used in various forms such as a film, a sheet, a foil, a net, a porous body, a foam, and a non-woven fabric body, and may have a thickness of 3 µm to 500 µm.

The positive electrode active material is a compound capable of reversible intercalation and deintercalation of lithium, and specifically, may include a lithium composite metal oxide including lithium and at least one metal such as cobalt, manganese, nickel, or aluminum.

The electrolyte 300 may be a non-aqueous electrolyte. The electrolyte 300 may include a lithium salt and an organic solvent. The organic solvent may include at least one of propylene carbonate (PC), ethylene carbonate (EC), diethyl carbonate (DEC), dimethyl carbonate (DMC), ethyl methyl carbonate (EMC), methyl propyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

The separator 400 may be configured to prevent an electrical short circuit between the negative electrode 100 and the positive electrode 200 and to allow a flow of ions. The separator 400 may include a porous polymer film or a porous non-woven fabric. Here, the porous polymer film may be composed of a single layer or multiple layers including a polyolefin-based polymer such as an ethylene polymer, a propylene polymer, an ethylene/butene copolymer, an ethylene/hexene copolymer, and an ethylene/methacrylate copolymer. The porous non-woven fabric may include high-melting-point glass fibers and polyethylene terephthalate fibers. However, the present disclosure is not limited thereto, and according to an embodiment, the separator may be a high-heat-resistance separator including ceramic (CCS; Ceramic Coated Separator).

A contact angle between the negative electrode 100 and the electrolyte 300 may be 50° or less, 45° or less, 40° or less, or 10° to 50°. The contact angle may be measured according to ASTM D7334. When the range is satisfied, the surface wettability of the negative electrode 100 is excellent, so that the uniformity of a Solid Electrolyte Interphase (SEI) layer may be improved, and the initial power characteristics and life stability of the secondary battery 1000 may be improved.

A composition for preparing a copper foil according to the present disclosure may include copper ions, an inorganic acid, and a protein derivative having a weight average molecular weight of 1,000 g/mol to 10,000 g/mol.

As used herein, the term "protein derivative" refers to natural or modified forms of proteins, provided that the weight average molecular weight is controlled within the range of from 1,000 g/mol to 10,000 g/mol The protein derivative thus encompasses both intact and partially degraded proteinaceous materials that retain biological or functional characteristics relevant to the invention.

The protein derivative may induce the growth direction control and particle refinement of the copper layer 11 and may enhance surface flattening and thermal stability.

The content of the protein derivative may be 3 ppm to 20 ppm, 3 ppm to 18 ppm, 3 ppm to 17 ppm, 3 ppm to 16 ppm, or 3 ppm to 15 ppm based on a total weight of the composition for preparing a copper foil. When the range is satisfied, the thermal stability and surface flattening of the copper layer 11 may be improved, and the tensile strength may be enhanced.

The protein derivative may include a protein derivative. The protein derivative may include at least one of collagen, collagen peptide, and gelatin.

The weight average molecular weight of the protein derivative may be 1,000 g/mol to 10,000 g/mol, 1,000 g/mol to 10,000 g/mol, 1,000 g/mol to 10,000 g/mol, or 1,000 g/mol to 10,000 g/mol. When the range is satisfied, the surface flattening of the copper layer 11 may be improved, and the generation of bubbles and voids on the surface of the copper layer 11 due to an increase in the viscosity of the electrolyte solution 40 may be suppressed.

The protein derivative may include an α-helix structure and a β-sheet structure, wherein a ratio of the α-helix structure to the β-sheet structure may be 7:3 to 3:7.

The α-helix structure enables stable adsorption with the copper ions due to strong hydrogen bonding, and the current distribution may become uniform according to a layered structure. The β-sheet structure, as an average structure, enables wide surface area coverage, forms a porous network, and allows for selective ion permeation and large crystallization.

A ratio of the α-helix structure to the β-sheet structure may be 7:3 to 3:7, 6.5:3.5 to 3:7, 6.5:3.5 to 3.5:6.5, or 6:4 to 4:6. When the range is satisfied, side reactions with chlorine ions may be suppressed to improve current efficiency, and an increase in the void generation rate due to the accumulation of the β-sheet structure may be prevented.

The composition for preparing a copper foil may be the same as the electrolyte solution to be described below.

FIG. 4 schematically illustrates an apparatus for manufacturing a copper foil according to an embodiment.

The copper foil 10 according to the present disclosure may be manufactured by the apparatus for manufacturing a copper foil.

The method of manufacturing the copper foil 10 may include a step of forming the copper layer 11 and a step of forming a protective layer 12 on the copper layer 11.

The apparatus for manufacturing the copper foil 10 may include an electrolytic bath 30 for containing an electrolyte solution 40, a positive electrode plate 50 including a first positive electrode plate 51 and a second positive electrode plate 52, and a rotating cathode drum 60.

The first positive electrode plate 51 and the second positive electrode plate 52 may be electrically insulated from each other.

The formation of the copper layer 11 may be carried out by forming a seed layer through energization between the first positive electrode plate 51 and the rotating cathode drum 60, and growing the seed layer through energization between the second positive electrode plate 52 and the rotating cathode drum 60.

A current density provided by each of the first positive electrode plate 51 and the second positive electrode plate 52 may be 40 ASD to 130 ASD, 45 ASD to 130 ASD, 45 ASD to 125 ASD, or 45 ASD to 120 ASD. When the range is satisfied, the formation of the negative electrode active material layer 15 on the copper foil 10 may be smoothly performed, and sufficient adhesive force may be imparted between the copper foil 10 and the negative electrode active material layer 15.

The surface characteristics of the copper layer 11 may be controlled according to the degree of surface buffing or polishing of the rotating cathode drum 60. For example, the surface of the rotating cathode drum 60 may be polished with a polishing brush having a grit of #800 to #3000.

During the formation process of the copper layer 11, the temperature of the electrolyte solution 40 may be maintained at 45 °C to 65 °C, 47 °C to 65 °C, 47 °C to 63 °C, or 47 °C to 60 °C. Depending on the temperature of the electrolyte solution 40, the size, crystal orientation, and electrodeposition rate of copper crystal grains may vary, and thereby the mechanical properties and surface roughness of the copper layer 11 may be controlled.

The electrolyte solution 40 may include copper ions, an inorganic acid, and an additive. The electrolyte solution 40 may include chlorine. The inorganic acid may include sulfuric acid.

The content of the copper ions in the electrolyte solution 40 may be 70 g/L to 150 g/L, 70 g/L to 110 g/L, 70 g/L to 100 g/L, or 70 g/L to 90 g/L.

The copper ions contained in the electrolyte solution 40 may be from a copper wire with a purity of 99.9% or more, which is pickled in 10% sulfuric acid for 10 to 20 minutes and then undergoes a water washing process with distilled water. The water washing process may prevent the pickled organic matter from entering the electrolyte solution 40. The concentration of the organic matter may be controlled by a filtration process using a medium such as diatomaceous earth or carbon.

The content of the sulfuric acid in the electrolyte solution 40 may be 80 to 130 g/L, 85 to 130 g/L, 90 to 130 g/L, or 90 to 125 g/L.

The chlorine may include chlorine ions and chlorine atoms. The chlorine may be used to remove silver (Ag) ions that have entered the electrolyte solution 40 during the process of forming the copper layer 11. The chlorine may precipitate the silver ions in the form of silver chloride (AgCl). The silver chloride may be removed by filtration.

The concentration of the chlorine may be 15 ppm to 30 ppm. When the range is satisfied, the removal of silver ions may be smoothly performed, and unnecessary reactions due to excess chlorine may be suppressed.

The additive may include the aforementioned protein derivative.

The additive may include a first additive that may impart a surface gloss, stress reduction, and leveling function to the copper layer 11.

The charge amount of the electrolyte solution 40 may be increased by the first additive, so that the electrodeposition speed of the copper ions may increase, the curl characteristics of the manufactured copper foil 10 may be improved, and the gloss of the copper foil 10 may be improved.

The concentration of the first additive may be 1 ppm to 20 ppm, 2 ppm to 20 ppm, 3 ppm to 20 ppm, or 3 ppm to 18 ppm. When the range is satisfied, the surface roughness of the manufactured copper foil 10 may be maintained, and the gloss may be improved.

The first additive may include sulfonic acid or a metal salt thereof.

The first additive may include at least one of bis-(3-sulfopropyl)-disulfide disodium salt, diethylenetriaminepenta(methylenesulfonic acid), 3-mercapto-1-propanesulfonic acid, 3-(N,N-dimethylthiocarbamoyl)-thiopropanesulfonate sodium salt, 3-[(amino-iminomethyl)thio]-1-propanesulfonate sodium salt, o-ethyldithiocarbonato-S-(3-sulfopropyl)-ester sodium salt, 3-(benzothiazolyl-2-mercapto)-propyl-sulfonic acid sodium salt, and ethylenedithiodipropylsulfonic acid sodium salt.

The additive may include a second additive that can provide functions of relaxing the deposition rate of the copper layer 11 and improving the uniformity thereof.

The second additive may prevent a sharp increase in roughness of the copper layer 11 and a decrease in strength thereof.

The concentration of the second additive may be 0.1 ppm to 20 ppm, 0.1 ppm to 15 ppm, 0.1 ppm to 12 ppm, or 1 ppm to 10 ppm. When the range is satisfied, the manufactured copper foil 10 may be prevented from being wrinkled and torn, and its appearance, gloss, strength, and elongation properties may be maintained.

The second additive may include a non-ionic water-soluble polymer.

The second additive may include at least one of hydroxyethyl cellulose, hydroxypropyl cellulose, ethyl cellulose, carboxymethyl cellulose, hydroxypropyl methyl cellulose, methyl cellulose, polyethylene glycol, polyvinyl alcohol, polypropylene glycol, polyacrylamide, polyoxyethylene, polyvinylpyrrolidone, polyethylene-polypropylene copolymers, polyglycerin, polyethylene glycol dimethyl ether, stearic acid polyglycol ether, and stearyl alcohol polyglycol ether.

The additive may include a third additive which can prevent electrodeposition clogging in a fine pattern of the copper layer 11, thereby maintaining flatness.

By the third additive, electrodeposition is suppressed in areas of the copper layer 11 where the local current density is high, whereby a leveling action that flattens the surface of the copper layer 11 may be performed.

The concentration of the third additive may be 1 ppm to 20 ppm, 1 ppm to 10 ppm, or 1 ppm to 9 ppm. When the range is satisfied, the surface gloss of the manufactured copper foil 10 is uniform, and the phenomenon of a rapid increase in surface roughness may be suppressed.

The third additive may include a nitrogen-containing heterocyclic quaternary ammonium salt or its derivative.

The third additive may include at least one of compounds represented by Formulas 1 to 5 below:

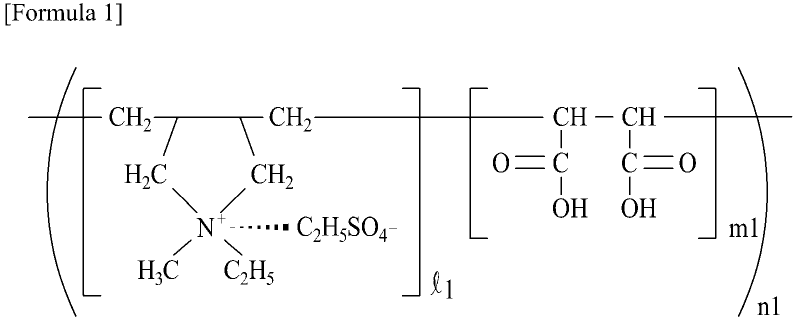

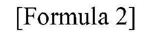

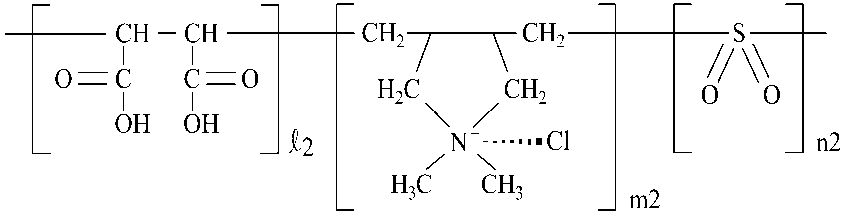

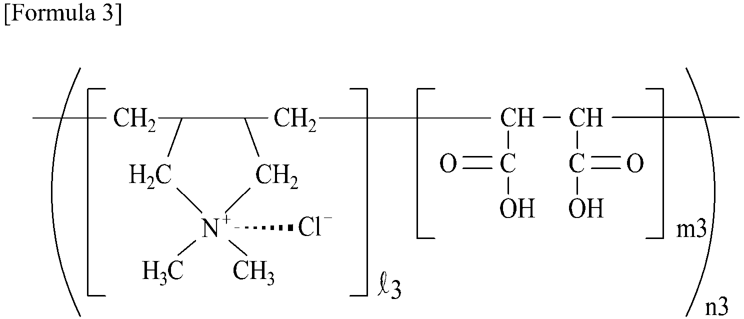

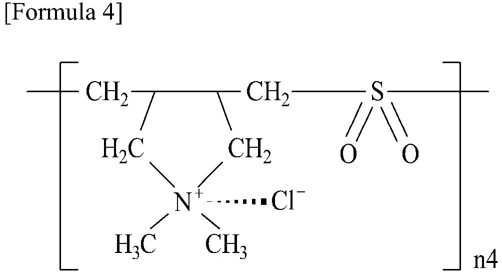

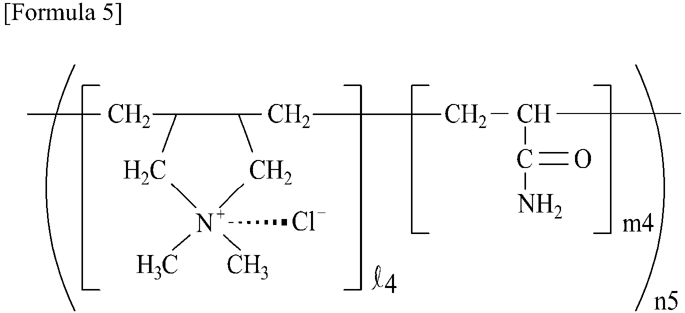

In Formulas 1 to 5, ℓ1 to ℓ4, m1 to m4, and n1 to n5 each represent a repeating unit, are integers of 1 or more, and may be the same as or different from each other.

Each of the compounds represented by Formulas 1 to 5 may have a number average molecular weight of 500 g/mol to 12,000 g/mol. When the range is satisfied, an increase in a surface roughness deviation may be suppressed, so that the gloss and flatness of the copper layer 11 may be improved.

The compounds represented by Formulas 1 to 5 may be prepared by polymerization or copolymerization using Diallyl Dimethyl Ammonium Chloride (DDAC). The compound represented by Formula 1 may be PAS-2451 (Mw 30,000 g/mol, from Nittobo). The compound represented by Formula 2 may be PAS-84 (Mw 20,000 g/mol, from Nittobo). The compound represented by Formula 3 may be PAS-2351 (Mw 25,000 g/mol, from Nittobo). The compound represented by Formula 4 may be PAS-A-1 (Mw 5,000 g/mol, from Nittobo), or PAS-A-5 (Mw 4,000 g/mol, from Nittobo). The compound represented by Formula 5 may be PAS-J-81 (Mw 180,000 g/mol, from Nittobo).

The additive may include a fourth additive for the surface uniformity of the copper layer 11.

The fourth additive may include a metal chelating agent.

The content of the metal chelating agent may be 0.5 ppm to 3 ppm, 0.8 ppm to 3 ppm, 1 ppm to 3 ppm, or 1.2 ppm to 3 ppm based on the total weight of the composition for preparing a copper foil. When the range is satisfied, the uniformity of the copper foil 10 may be improved, and the generation of bubbles on the surface of the copper foil 10 may be suppressed. In addition, since the concentration of copper ions is uniform, the plating speed of the copper ions may be increased, and the current efficiency of the manufactured secondary battery 1000 may be improved.

The electrolyte solution 40 may include a copper chelate complex. The copper chelate complex may be formed by a chelate bond between the copper ions and the metal chelating agent.

The content of hydrogen peroxide (H₂O₂) in the electrolyte solution 40 may be 1 ml/L to 10 ml/L, 1 ml/L to 9.5 ml/L, 1 ml/L to 9.2 ml/L, or 1 ml/L to 9 ml/L.

The concentration of silver (Ag) in the electrolyte solution 40 may be 0.1 ppm to 10 ppm, 0.1 ppm to 9.5 ppm, 0.1 ppm to 9 ppm, or 0.1 ppm to 8 ppm.

The concentration of cerium (Ce) in the electrolyte solution 40 may be 2 ppm to 10 ppm, 2 ppm to 9.5 ppm, 2 ppm to 9 ppm, or 2 ppm to 8 ppm.

The concentration of lead (Pb) in the electrolyte solution 40 may be 1 ppm to 20 ppm, 1 ppm to 19 ppm, 1 ppm to 18 ppm, or 1 ppm to 15 ppm.

The concentration of molybdenum (Mo) in the electrolyte solution 40 may be 25 ppm or less, 20 ppm or less, 15 ppm or less, or 0.1 ppm to 25 ppm.

The concentration of nickel (Ni) in the electrolyte solution 40 may be 15 ppm to 150 ppm, 15 ppm to 130 ppm, 15 ppm to 120 ppm, or 15 ppm to 100 ppm.

The concentration of tungsten (W) in the electrolyte solution 40 may be 0.3 ppm to 5 ppm, 0.3 ppm to 4.5 ppm, 0.3 ppm to 4.2 ppm, or 0.3 ppm to 4 ppm.

The concentration of cobalt (Co) in the electrolyte solution 40 may be 330 ppm or less, 320 ppm or less, 300 ppm or less, or 100 ppm to 330 ppm.

The concentration of iron (Fe) in the electrolyte solution 40 may be 300 ppm or less, 280 ppm or less, 250 ppm or less, or 0.1 ppm to 300 ppm.

The concentration of arsenic (As) in the electrolyte solution 40 may be 0.5 ppm to 5 ppm, 0.5 ppm to 4.5 ppm, 0.5 ppm to 4.2 ppm, or 0.5 ppm to 4 ppm.

The concentrations of silver, cerium, lead, molybdenum, nickel, tungsten, cobalt, iron and arsenic described above include all atoms present in ions and molecules.

When the range is satisfied, the crystal grain structure of the copper foil 10 is uniformly maintained, and the anisotropy of crystal growth is suppressed, so that the mechanical resilience of the local surface may be improved. As a result, the indentation elastic modulus according to the aforementioned measurement conditions may satisfy the range of 15 MPa to 30 MPa.

When forming the copper layer 11, the flow rate of the electrolyte solution 40 supplied into the electrolytic bath 30 may be 35 m³/hour to 46 m³/hour, 37 m³/hour to 46 m³/hour, 39 m³/hour to 46 m³/hour, or 41 m³/hour to 45 m³/hour. When the range is satisfied, the electrolyte solution 40 is filtered during the circulation process of the electrolyte solution 40, so that solid impurities present in the electrolyte solution 40 may be removed while electroplating for forming the copper layer 11 is being performed.

A flow rate deviation of the electrolyte solution 40 may be controlled to be 5% or less, 4% or less, 3% or less, or 2% or less per unit time (second). When the range is satisfied, the copper layer 11 may be uniformly formed, and a deviation in the weight of the manufactured copper foil 10 may be minimized.

To remove impurities from the surface of the copper layer 11, water washing may be performed in a washing tank. To remove impurities from the surface of the copper layer 11, acid cleaning may be performed, and then water cleaning may be performed to remove the acidic solution used for the acid cleaning.

The method of manufacturing the copper foil 10 may include a step of forming a protective layer 12 on the copper layer 11. The copper layer 11 may be immersed in an anticorrosion solution 70. The copper layer 11 may be guided by a guide roll disposed in the anticorrosion solution 70 when being immersed in the anticorrosion solution 70.

The anticorrosion solution 70 may include at least one of a chromium compound, a silane compound, and a nitrogen compound. When forming the protective layer 12 on the copper layer 11, a method of immersing the copper layer 11 in a potassium dichromate solution of 1 g/L to 10 g/L at room temperature for 1 to 30 seconds may be performed. The protective layer 12 may include a silane compound by silane treatment, and may include a nitrogen compound by nitrogen treatment. The copper foil 10 may be manufactured by forming the protective layer 12.

Hereinafter, the present disclosure is described in more detail based on Examples and Comparative Examples. However, the following Examples and Comparative Examples are only examples for explaining the present disclosure in more detail, and the present disclosure is not limited by the following Examples and Comparative Examples.
- Protein derivative #1: Collagen (Mw 5,000 g/mol, α-helix 60 %, β-sheet 40 %)
- Protein derivative #2: Collagen (Mw 4,000 g/mol, α-helix 40 %, β-sheet 60 %)
- Protein derivative #3: Collagen (Mw 11,000 g/mol, α-helix 80 %, β-sheet 20 %)
- Protein derivative #4: Collagen (Mw 800 g/mol, α-helix 20 %, β-sheet 80 %)

### Examples

### Example 1

A copper foil was manufactured using a foil-making machine including an electrolytic bath 30, a rotating cathode drum 60 disposed in the electrolytic bath 30, and a positive electrode plate 50 disposed apart from the rotating cathode drum 60.

The electrolyte solution 40 was a copper sulfate solution, the concentration of copper ions in the electrolyte solution 40 was 87 g/L, the concentration of sulfuric acid was 110 g/L, and the temperature of the electrolyte solution 40 was set to 55 °C and the current density of the electrolyte solution 40 was set to 60 ASD (A/dm²). In addition, the concentration of chlorine (Cl) contained in the electrolyte solution 40 was maintained at 20 ppm.

10 ppm of bis-(3-sulfopropyl)-disulfide disodium salt (SPS), 5 ppm of polyethylene glycol (PEG), and 2 ppm of chitosan were contained in the electrolyte solution 40. In addition, 10 ppm of the protein derivative #1 was contained in the electrolyte solution 40.

A current was applied between the rotating cathode drum 60 and the positive electrode plate 50 with a current density of 60 ASD, whereby the copper layer 11 was manufactured. Next, the copper layer 11 was immersed in the anticorrosion solution 70 for about 2 seconds. The anticorrosion solution 70 contained chromic acid as a main component, and the concentration of the chromic acid was 5 g/L.

Next, a chromate treatment was performed on both sides of the copper layer 11 to form a protective layer, whereby the copper foil 10 having a thickness of 6 µm was manufactured.

### Examples 2 to 6 and Comparative Examples 1 to 5

Copper foils were manufactured under the same process conditions as in Example 1, except that the main compositions of each electrolyte solution and the content of each composition were applied as described in Table 1 below, and the thickness of the manufactured copper foil was adjusted.

**[Table 1]**

| Classification | SPS (ppm) | PEG (ppm) | Chitosan (ppm) | Protein derivative #1 (ppm) | Protein derivative #2 (ppm) | Protein derivative #3 (ppm) | Protein derivative #4 (ppm) | Thickness of copper foil (µm) |
|---|---|---|---|---|---|---|---|---|
| Example 1 | 10 | 5 | 2 | 10 | - | - | - | 6 |
| Example 2 | 10 | 5 | 2 | - | 10 | - | - | 6 |
| Example 3 | 10 | 5 | 2 | 5 | - | - | - | 6 |
| Example 4 | 10 | 5 | 2 | - | 5 | - | - | 6 |
| Example 5 | 10 | 5 | 2 | 15 | - | - | - | 6 |
| Example 6 | 10 | 5 | 2 | - | 15 | - | - | 8 |
| Comparative Example 1 | 10 | 5 | - | - | - | - | - | 6 |
| Comparative Example 2 | 10 | 5 | 2 | - | - | - | 30 | 6 |
| Comparative Example 3 | 10 | 5 | 2 | - | - | 15 | - | 6 |
| Comparative Example 4 | 10 | 5 | - | - | - | - | - | 8 |
| Comparative Example 5 | 10 | 5 | 10 | - | - | 50 | - | 6 |

### Experimental Examples

### Experimental Example 1 - Indentation elastic modulus

A sample of each of the copper foils prepared in Examples 1 to 6 and Comparative Examples 1 to 5 was provided. The indentation elastic modulus was measured according to the following measurement conditions based on ISO 14577, and the results are shown in Table 2 below.

### [Measurement conditions]

- Measurement equipment: HM 2000 (Helmut Fischer)
- Load: 15 mN
- Load increase time and unload time: 10 sec
- Creep holding time: 3 sec
- Indenter type: Vickers (correction factor: 0.75)
- Temperature: 23 ± 2 °C
- Humidity: 45 ± 5 %R.H.

### Experimental Example 2 - Indentation creep

For each of the copper foil samples prepared in Experimental Example 1, the indentation creep was measured under the same measurement conditions as in Experimental Example 1, and the results are shown in Table 2 below.

### Experimental Example 3 - Tensile modulus and tensile elasticity

For each of the copper foils prepared in Examples 1 to 5 and Comparative Examples 1 to 5, the tensile modulus and the tensile elasticity were measured under the conditions of a length of 50 mm, a width of 12.7 mm, and a speed of 50 mm/min using Instron 6800 equipment according to IPC-TM-650. The results are shown in Table 2 below.

### Experimental Example 4 - Mechanical Stability Index (MSI)

For the tensile modulus, tensile elasticity, indentation creep, and indentation elastic modulus measured in Experimental Examples 1 to 3, the mechanical stability index was calculated according to Equation 1 below. The results are shown in Table 2 below. [Equation 1] 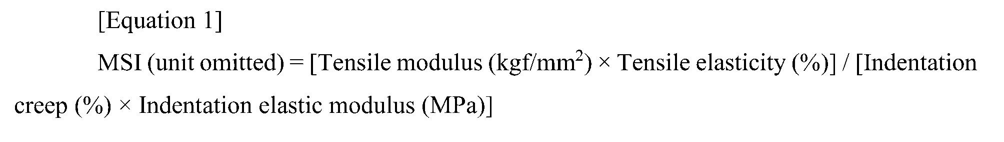 MSI (unit omitted) = [Tensile modulus (kgf/mm2) × Tensile elasticity (%)]/[Indentation creep (%) × Indentation elastic modulus (MPa)]

### Experimental Example 5 - Electrode warpage evaluation

An active material slurry was applied to each of the copper foils prepared in Examples 1 to 6 and Comparative Examples 1 to 5. The active material slurry was mixed with 2 parts by weight of styrene-butadiene rubber (SBR) and 2 parts by weight of carboxymethyl cellulose (CMC) with respect to 100 parts by weight of graphite. The active material slurry was uniformly applied on the copper foil in a roll-to-roll method and in a Machine Direction (MD) and then dried. The coating amount of the active material slurry was about 16 mg/cm², and the thickness was about 100 µm.

After the active material slurry was dried, a roll press process was performed under the conditions of a roll gap of 6 µm, a speed of 1 m/min, a linear pressure of 1,000 kgf/cm, and a pressure of 2,500 kg, whereby an electrode in which an active material layer with a density of about 1.5 g/cm³ was formed was manufactured.

After each of the manufactured electrodes was cut into a size of 10 cm × 10 cm, it was placed horizontally on a glass plate. Next, the height of the four corners of the electrode was measured, and the average value thereof was calculated as the warpage value of the electrode. After the warpage value was measured for each of the two sides of the electrode, the larger of the two values was used as the final warpage value of the electrode. When the electrode warped by 5 mm or more toward one surface, it was evaluated as poor, and the results are shown in Table 2 below.

### Experimental Example 6 - Evaluation of occurrence of wrinkles and/or tearing

During the process of manufacturing the negative electrode in Experimental Example 5, whether wrinkles and/or tearing occurred on the copper foil was visually observed. The evaluation was performed according to the following criteria, and the results are shown in Table 2 below.
- Good: No wrinkles and tearing occurred in the copper foil
- Poor: Wrinkles or tearing occurred in the copper foil

### Experimental Example 7 - Fracture evaluation

For each of the negative electrodes manufactured in Experimental Example 5, a metallic lithium foil with a thickness of 0.4 mm was used as a counter electrode (positive electrode). A polypropylene sheet having a thickness of 0.1 mm was used as a separator, and a coin-type half-cell was manufactured by using a solution, in which 1 M of LiPF₆ was dissolved in a solvent containing ethylene carbonate and ethyl methyl carbonate mixed in a volume ratio of 3:7, as an electrolyte solution.

Each of the coin-type half-cells was charged with a constant current of 0.1C until the voltage reached 0.01V, and a process of discharging with a constant current of 0.1C until the voltage reached 1.5V was performed three times to proceed with a stabilization process of the battery.

Next, each of the coin-type half-cells was charged with a constant current of 0.5 C until the voltage reached 0.01 V, and the process of discharging with a constant current of 0.5 C until the voltage reached 1.0 V was performed 500 times. After 500 charge/discharge experiments were performed, whether or not the negative electrode included in the coin-type half-cell was fractured was observed. The evaluation was performed according to the following criteria, and the results are shown in Table 2 below.
- ∘: No fracture occurred in the negative electrode.
- ×: A fracture occurred in the negative electrode.

### Experimental Example 8 - Current efficiency evaluation

For each of the coin-type half-cells manufactured in Experimental Example 7, a charge/discharge experiment was performed, and the current efficiency was measured according to the following equation. A total of 10 cycles were performed, and the current efficiency for each cycle from the second cycle to the tenth cycle, excluding the initial first cycle, was measured. Next, the average value of the measured current efficiencies was evaluated according to the following criteria, and the results are shown in Table 2 below.
- Excellent: Current efficiency of 99.5% or more
- Suitable: Current efficiency of 99% or more
- Unsuitable: Current efficiency of less than 99%

**[Table 2]**

| Classifica tion | Indentat ion elastic modulu s (MPa) | Indentat ion creep (%) | Tensile modulus (kgf/mm ²)¹⁾ | Tensil e elastic ity (%) | MSI ²⁾ | Electro de warpag e evaluat ion | Evaluat ion of occurre nce of wrinkle s and/or tearing | Fractur e evaluat ion | Current efficien cy evaluati on |
|---|---|---|---|---|---|---|---|---|---|
| Example 1 | 21.79 | 3.30 | 5640.9 | 25.7 | 2016 .1 | Good | Good | ○ | Excelle nt |
| Example 2 | 18.85 | 2.51 | 5520.5 | 46.2 | 5390 .6 | Good | Good | ○ | Excelle nt |
| Example 3 | 19.17 | 3.70 | 6449.3 | 20.5 | 1864 .0 | Good | Good | ○ | Excelle nt |
| Example 4 | 20.98 | 3.40 | 5509.1 | 40.7 | 3143 .3 | Good | Good | ○ | Excelle nt |
| Example 5 | 18.15 | 4.00 | 5681.3 | 23.6 | 1846 .8 | Good | Good | ○ | Excelle nt |
| Example 6 | 27.38 | 2.18 | 5583.9 | 27.3 | 2553 .9 | Good | Good | ○ | Excelle nt |
| Comparat ive Example 1 | 10.93 | 7.34 | 4723.8 | 18.6 | 1095 .2 | Poor | Poor | × | Unsuita ble |
| Comparat ive Example 2 | 13.57 | 5.23 | 5122.1 | 20.3 | 1465 .1 | Good | Poor | × | Suitabl e |
| Comparat ive Example 3 | 13.62 | 5.22 | 5228.3 | 20.5 | 1507 .5 | Poor | Good | ○ | Unsuita ble |
| Comparat ive Example 4 | 12.35 | 6.49 | 4874.3 | 19.5 | 1185 .9 | Poor | Poor | × | Unsuita ble |
| Comparat ive Example 5 | 32.20 | 12.03 | 7212.1 | 20.4 | 379. 8 | Poor | Good | ○ | Suitabl e |
| 1) The unit of the tensile modulus is converted to the corresponding SI unit, N/mm² by multiplying 9.8 N/kgf. | | | | | | | | | |
| 2) Mechanical Stability Index (MSI): (Tensile modulus × Tensile elasticity) / (Indentation creep × Indentation elastic modulus) | | | | | | | | | |

According to Tables 1 and 2, the copper foils according to Examples 1 to 6 satisfy the indentation elastic modulus range of 15 MPa to 30 MPa.

By having an indentation elastic modulus within this range, it was confirmed that the uniformity of the copper layer can be improved to enhance current efficiency, and that mechanical damage, such as warpage, wrinkling, tearing, and fracture, to an electrode does not occur when it is applied to a current collector of a secondary battery.

A copper foil according to the present disclosure satisfies an indentation elastic modulus of 15 MPa to 30 MPa. By satisfying this range, the local elastic restoring force and surface rigidity of the copper foil can be secured. As a result, resistance to the curvature stress occurring when the copper foil is bent can be imparted. In addition, a dispersion effect for the compressive stress and tensile stress that occurs during a roll-pressing process can be provided, so the occurrence of wrinkles and ruptures on the copper foil can be suppressed. Furthermore, the copper foil can have appropriate flexibility so that it is not fractured by external force, and sufficient mechanical elasticity can be secured. Moreover, the interfacial stability between the copper foil and an active material layer is improved, so that the delamination of the active material layer is suppressed. As a result, the consistency of current flow can be maintained, and the battery life can be increased.

### [Description of Symbols]

10: copper foil
11: copper layer
12: protective layer
15: negative electrode active material layer
20: positive electrode current collector
25: positive electrode active material layer
30: electrolytic bath
40: electrolyte solution
50: positive electrode plate
51: first positive electrode plate
52: second positive electrode plate
60: rotating cathode drum
70: anticorrosion solution
100: negative electrode
200: positive electrode
300: electrolyte
400: separator
1000: secondary battery

## Claims

1. A copper foil, comprising: a copper layer,
wherein the copper foil has an indentation elastic modulus of 15 MPa to 30 MPa according to measurement conditions below based on ISO 14577:
[Measurement conditions]
- Measurement equipment: HM 2000 (Helmut Fischer)
- Load: 15 mN
- Load increase time and unload time: 10 sec
- Creep holding time: 3 sec
- Indenter type: Vickers.

2. The copper foil according to claim 1, wherein the copper foil has a Mechanical Stability Index (MSI) of 1,800 or more according to Equation 1 below: [Equation 1] 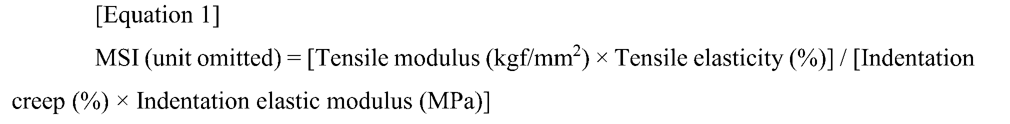 MSI (unit omitted) = [Tensile modulus (kgf/mm2) × Tensile elasticity (%)]/[Indentation creep (%) × Indentation elastic modulus (MPa)] where the indentation creep is measured according to the measurement conditions of the indentation elastic modulus, and the tensile modulus and the tensile elasticity are measured according to IPC-TM-650.

3. The copper foil according to claim 2, wherein the indentation creep is 2 % to 5 %.

4. The copper foil according to claim 2 or 3, wherein the tensile modulus is 5,000 kgf/mm² (49,033.3 N/mm²) to 7,000 kgf/mm² (68,646.6 N/mm²).

5. The copper foil according to any one of the claims 2 to 4, wherein the tensile elasticity is 20 % to 50 %.

6. The copper foil according to any one of the preceding claims, wherein the copper foil comprises a protective layer formed on at least one surface of the copper layer,
wherein the protective layer comprises at least one of a chromium compound, a silane compound, and a nitrogen compound.

7. An electrode, comprising:
a current collector comprising a copper foil according to any one of the preceding claims; and
an active material layer formed on at least one surface of the current collector.

8. A secondary battery, comprising:
a negative electrode according to claim 7;
a positive electrode;
an electrolyte; and
a separator interposed between the negative electrode and positive electrode.

9. A composition for preparing a copper foil, comprising:
copper ions;
an inorganic acid; and
a protein derivative having a weight average molecular weight of 1,000 g/mol to 10,000 g/mol.

10. The composition according to claim 9, wherein a content of the protein derivative is 3 ppm to 20 ppm based on a total weight of the composition for preparing a copper foil.

11. The composition according to claim 9 or 10, wherein the protein derivative comprises an α-helix structure and a β-sheet structure, wherein a ratio of the α-helix structure to the β-sheet structure is 7:3 to 3:7.

12. Use of the composition according to anyone of claims 9 to 11 for preparing a copper foil, optionally for preparing a current collector and/or an electrode which respectfully comprise the produced copper foil.

13. The use according to claim 12 for preparing a copper foil as defined in any one of claims 1 to 6.
